# EUROPÄISCHE PATENTSCHRIFT

(11) **EP 0 483 585 B1**
(45) Veröffentlichungstag und Bekanntmachung des Hinweises auf die Patenterteilung: **25.01.1995**
(21) Anmeldenummer: 91117532.1
(22) Anmeldetag: 15.10.1991
(51) Int. Cl.: F15B 13/043, F16K 31/40

(54) **Einstellbares Proportional-Drosselventil mit Rückführung**
Adjustable proportional throttle valve with feedback
Valve d'étranglement proportionelle réglable à contre-réaction

(30) Priorität: 31.10.1990 LU 87831
(43) Veröffentlichungstag der Anmeldung: 06.05.1992
(73) Patentinhaber: HYDROLUX S.A.R.L., 1112 Luxembourg (LU)
(72) Erfinder: Schwelm, Hans, L-1466 Luxembourg-Dommeldange (LU)
(74) Vertreter: Freylinger, Ernest T.

(56) Entgegenhaltungen:
- EP-A- 0 073 268
- DE-A- 3 124 552
- DE-B- 1 196 458

## Beschreibung

Die Erfindung betrifft ein einstellbares Proportional-Drosselventil mit einem ein- oder mehrteiligen Gehäuse, welches ein Drosselteil als Zweiwege-Sitzventil mit einem axial beweglichen, hydraulisch betätigten Folgedrosselkolben und ein Steuerteil umfasst, wobei der Folgedrosselkolben an seinem ersten Ende eine Sitzfläche aufweist, die mit einem entsprechendem Sitz des Gehäuses eine ringförmige Drosselstelle zwischen einem ersten und zweiten Hauptstromanschluss des Gehäuses ausbildet, und an seinem zweiten, entgegengesetzten Ende in einer Druckkammer des Gehäuses eine Druckschulter aufweist, wobei diese Druckkammer durch einen ersten Verbindungskanal im Folgedrosselkolben mit dem ersten Hauptstromanschluss und durch einen zweiten Verbindungskanal mit dem zweiten Hauptstromanschluss verbunden ist, und wobei der erste Verbindungskanal eine über den Steuerteil regelbare Öffnung zur Regelung des Druckes in der Druckkammer und damit der Bewegung und Stellung des Folgedrosselkolbens aufweist.

Einstellbare Proportional-Drosselventile mit Rückführung sind allgemein bekannt und finden in sämtlichen Hydraulikaggregaten Anwendung. Unter der Vielzahl von Anwendungen gibt es verschiedene, wie z.B. Hydraulikpressen oder Schwerlastkrane, wobei trotz der Grösse der Anlage und der Grösse des hydraulischen Betriebsdruckes sehr genaue Bewegungen ausgeführt werden müssen und demgemäss hohe Anforderungen an die Präzision und Genauigkeit der Arbeitsweise der Drosselventile gestellt werden.

Die bekannten Drosselventile nach einem früheren Stand der Technik erfüllten die gestellten Forderungen jedoch nur teilweise oder ungenügend. Einerseits verlangten diese Drosselventile zu hohe Stellkräfte im Steuerteil, was vom wirtschaftlichen Standpunkt gesehen nachteilig ist. Andererseits besassen die bekannten Drosselventile für die verschiedenen Anwendungen zu hohe Schaltzeiten, welche ihren Einsatz in Frage stellten. Ausserdem waren diese bekannten Drosselventile einem hohen Verschleiss ausgesetzt, so dass ihre Lebensdauer ungenügend war.

Im Dokument LU-A-84377 wird deshalb ein einstellbares Proportional-Drosselventil beschrieben, bei welchem auf die aufwendige Vorsteuerung mit Kraftrückführung verzichtet und die Baugrösse reduziert werden kann, unter Beibehaltung der im Prinzip gegebenen Vorteile dieser Ventile.

Der Hauptgedanke der in dem genannten Dokument beschriebenen Erfindung bestand darin, den Öldruck des eigentlichen Arbeitssystems als Servoenergielieferant zum Betätigen der für den Volumenstrom durch das Drosselventil massgeblichen Ventilkomponente heranzuziehen, wobei neben anderer Vorteile eine weitgehende Entlastung des Steuerteils erzielt wurde. Dies konnte durch eine Folgedrosselkolben-Anordnung realisiert werden.

Für die Kennzeichen der Arbeitsweise des im genannten Dokument vorgestellten Ventils möge man sich auf dieses Dokument beziehen.

Es ist Aufgabe der Erfindung, das einstellbare Proportional-Drosselventil der eingangs beschriebenen Art noch weiter zur vervollkommnen indem die Ventilschaltzeiten ganz wesentlich verkürzt werden und die Wiederholgenauigkeit entscheidend verbessert wird.

Diese Aufgabe wird durch die kennzeichnenden Merkmale des Anspruchs 1 gelöst.

Das erfindungsgemässe Ventil umfasst demnach einen Differenzial-Führungskolben, welcher zum Ablaufkanal des Folgedrosselkolbens fluchtend geführt ist und mit der Sitzfläche dieses Ablaufkanals eine an sich bekannte Kantensteuerung in Sitzbauweise bildet, einen induktiven Wegaufnehmer zur Positionsermittlung des Führungskolbens, sowie ein durch einen Proportionalmagneten gesteuertes Proportional-Wegeventil, das durch eine Zweikantensteuerung eine Pilotleitung druckbe-oder entlastet, wobei diese Komponenten zusammen einen geschlossenen Regelkreis bilden, eine Druckfeder in einem Druckfederraum, welche den Führungskolben in Richtung Schliesstellung der Kantensteuerung beaufschlagt, eine Verbindungsleitung zwischen dem Proportional-Wegeventil und dem Federraum, welche den Differenzial-Führungskolben durch Druckbelastung oder Druckentlastung gegen die resultierende Kraft eines Eingangsdruckes auf die Fläche der Druckschulter des Differenzial-Führungskolbens positionniert und damit ebenfalls durch die Wirkung eines eingangs- bzw. lastseitigen Öldrucks des Arbeitssystems den Folgedrosselkolben positionniert, wobei der Durchflussquerschnitt an der Ventildrosselstelle eingangs-und lastdruckunabhängig nur in Abhängigkeit vom Eingangssignal an dem Proprotionalmagneten bestimmt wird.

Durch eine spezielle stufenförmige Gestaltung des Differenzial-Führungskolben wird die Flächenpressung im Bereich der Sitzfläche stark reduziert ohne jedoch die Dichtfunktion zu beeinträchtigen. Das Ventil zeichnet sich besonders durch hohe Geschwindigkeiten d.h. kurze Schaltzeiten, bei geringen Steuerölmengen und geringem Steuerdruck aus.

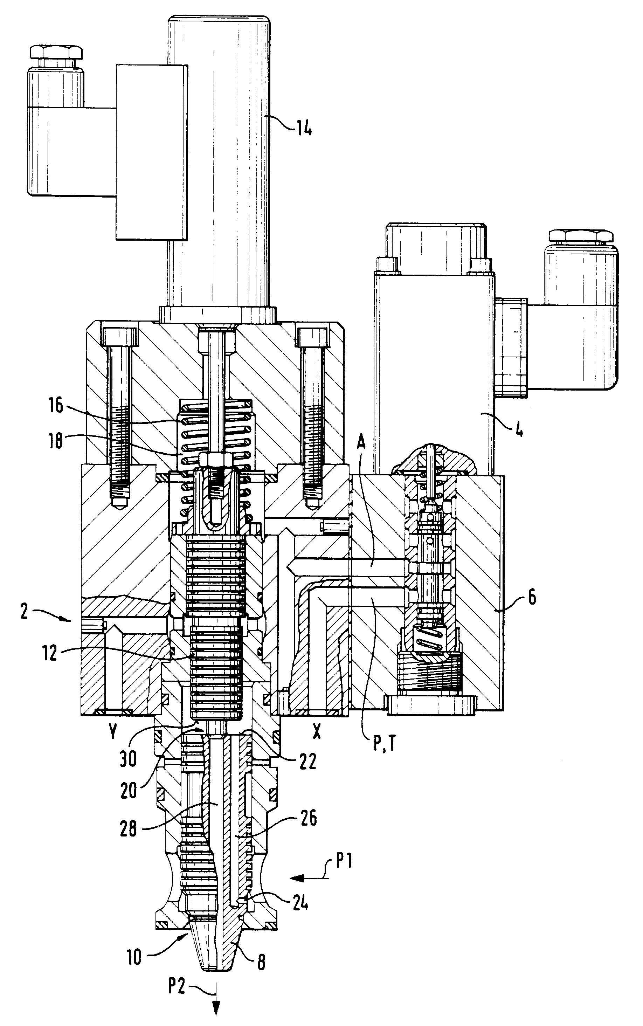

Ein Ausführungsbeispiel der Erfindung ist in Figur 1 dargestellt und wird im folgenden näher beschrieben.

Figur 1 zeigt einen Längsschnitt durch die wesentlichen Teile des erfindungsgemässen Ventils 2. Seine funktionsrelevanten-Komponenten sind ein Proportionalmagnet 4 zur Betätigung eines Proportional-Wegeventils 6 in Schieberbauweise, ein Folgedrosselkolben 8 zur Steuerung des Druchflussquerschnittes 10 zwischen einer Systemeingangsseite p₁ und einer Systemlastseite p₂, wobei diese Seiten auch, wie in LU-A-84377 beschrieben, vertauscht werden können, einen Differenzial-Führungskolben oder Stufenkolben 12, ein induktiver Wegaufnehmer 14 für diesen Führungskolben 12, eine Druckfeder 16 in einem abgedichteten Druckfederraum 18, welche den Differenzial-Führungskolben 12 in Richtung Folgedrosselkolben 8 beaufschlagt, eine Pilotleitung A zwischen dem Proportional-Wegeventil 6 und dem Druckfederraum 18, durch welche der Öldruck in letzterem gesteuert werden kann, sowie eine Kantensteuerung in Sitzbauweise 20, hier mit konischen Sitzflächen, zwischen dem Differenzial-Führungskolben 12 und dem Folgedrosselkolben 8.

Das Zusammenwirken von Kolben 8 und Kantensteuerung 20 wird im vorgenanntem Dokument im Detail beschrieben, wobei die Rückseite 22 des Folgedrosselkolbens 18 über eine Drosselstelle 24 und einen Längskanal 26 stets mit dem Eingangsdruck p₁ beaufschlagt wird und die beim Öffnen der Kantensteuerung 12 über einen zentralen Ablaufkanal 28 mit der Lastseite p₂ verbunden ist.

Im Gegensatz zum Ventil der eingangs genannten Gattung, d.h. dem im genannten Dokument beschriebenen, wird die Kantensteuerung 20 beim erfindungsgemässen Ventil nicht dadurch geöffnet, dass dem Differenzial-Führungskolben 12 entsprechende Komponenten durch eine Druckbeaufschlagung von einem Proportional-Wegeventil 6 her vom Sitz der Kantensteuerung 20 abgehoben würden, d.h. durch einen steuerseitig zugeführten Druck, sondern dadurch, dass der Systemdruck ₚ₁ auf eine erfindungsgemässe Druckschulter 30 am Führungskolben 12 wirkt. Das Öffnen der Kantensteuerung 20 geschieht jetzt, indem der Federraum 18 über die Arbeitsleitung A gezielt druckentlastet wird, ein Schliessen natürlich dadurch, dass der Federraum 18 durch die Verbindungsleitung A gezielt druckbeaufschlagt wird.

Sehr ausführliche Untersuchungen und Experimente haben bestätigt, dass durch die erfindungsgemässe Verbesserung des Ventils der eingangs genannten Gattung die anvisierten Ziele voll erreicht wurden, nämlich bis um den Faktor 10 kürzere Schaltzeiten und die durch den genannten geschlossenen Regelkreis mögliche Wiederholgenauigkeit. Als sehr erwünschter Nebeneffekt fällt an, dass durch den Druck auf die Druckschulter 30 die Flächenpressung an den Sitzflächen der Kantensteuerung 20 entscheidend vermindert wird ohne jedoch die Dichtfunktion zu beeinträchtigen.

## Patentansprüche

1. Einstellbares Proportional-Drosselventil mit einem ein- oder mehrteiligen Gehäuse, welches ein Drosselteil als Zweiwege-Sitzventil mit einem axial beweglichen, hydraulisch betätigten Folgedrosselkolben (8) und ein Steuerteil umfasst, wobei der Folgedrosselkolben (8) an seinem ersten Ende eine Sitzfläche aufweist, die mit einem entsprechendem Sitz des Gehäuses eine ringförmige Drosselstelle (10) zwischen einem ersten und zweiten Hauptstromanschluss des Gehäuses ausbildet, und an seinem zweiten, entgegengesetzten Ende in einer Druckkammer des Gehäuses eine Druckschulter (22) aufweist, wobei diese Druckkammer durch einen ersten Verbindungskanal (26) im Folgedrosselkolben (8) mit dem ersten Hauptstromanschluss und durch einen zweiten Verbindungskanal (28) mit dem zweiten Hauptstromanschluss verbunden ist, und wobei der erste Verbindungskanal (28) eine über den Steuerteil regelbare Öffnung zur Regelung des Druckes in der Druckkammer und damit der Bewegung und Stellung des Folgedrosselkolbens (8) aufweist,
**gekennzeichnet durch**
einen Differential-Führungskolben (12) welcher zum ersten Verbindungskanal (26) des Folgedrosselkolbens (8) fluchtend geführt ist und mit einer Sitzfläche am ersten Verbindungskanal (26) in der Druckkammer eine Kantensteuerung in Sitzbauweise bildet, wobei dieser Differential-Führungskolben (12) in der Druckkammer eine, in Öffnungsrichtung der Kantensteuerung (10) wirkende, Druckschulter (30) ausbildet,
einen induktiven Wegaufnehmer (14) zur Positionsermittlung des Führungskolbens (12),
eine Druckfeder (16) in einem Druckfederraum (18), welche den Führungskolben (12) in Richtung Schliesstellung der Kantensteuerung (10) beaufschlagt, wobei der Führungskolben (12) in diesem Druckfederraum eine in Richtung Schliesstellung der Kantensteuerung (10) wirkende Druckbetätigungsfläche ausbildet, und
ein durch einen Proportionalmagneten (4) gesteuertes Proportional-Wegeventil (6), das durch eine Zweikantensteuerung über eine Pilotleitung (A) den Federraum (18) druckbe- oder entlastet, wobei Wegaufnehmer (14), Führungskolben (12), Proportionalventil (6) und Proportionalmagnet (4) zusammen einen geschlossenen Regelkreis bilden.

2. Proportional-Drosselventil nach Anspruch 1, dadurch gekennzeichnet, dass der Führungskolben (12) einen Stufenkolben ausbildet, wobei seine Druckbetätigungsfläche im Federraum (18) grösser als seine entgegengesetzte, die Druckschulter (30) umfassende, Druckbetätigungsfläche in der Druckkammer ist.

## Claims

1. Adjustable proportional flow-control valve having a one-part or multi-part manifold comprising a flow-control portion in the form of a two-port positive-seating valve having an axially movable, hydraulically operated follower flow-control piston (8) and a control portion, the follower flow-control piston (8) having at its first end a seating surface which forms with a corresponding seat on the manifold an annular constriction (10) between a first and second main flow connection of the manifold, and having at its second, opposite end in a pressure chamber of the manifold a pressure shoulder (22), that pressure chamber being connected by a first connection channel (26) in the follower flow-control piston (8) with the first main flow connection and by a second connection channel (28) with the second main flow connection, and the first connection channel (28) having an opening, controllable by means of the control portion, for regulating the pressure in the pressure chamber and therewith the movement and position of the follower flow-control piston (8),
**characterised by**
a differential pilot piston (12) which is guided in alignment with the first connection channel (26) of the follower flow-control piston (8) and which forms with a seating surface of the first connection channel (26) in the pressure chamber an edge control means of positive-seating type, that differential pilot piston (12) forming in the pressure chamber a pressure shoulder (30) which acts in the opening direction of the edge control means (10),
an inductive displacement sensor (14) for detecting the position of the pilot piston (12),
a compression spring (16) in a compression spring chamber (18) which acts on the pilot piston (12) in the direction of the closure position of the edge control means (10), the pilot piston (12) forming in that compression spring chamber a pressure actuation surface acting in the direction of the closure position of the edge control means (10), and
a proportional directional valve (6), controlled by a proportional magnet (4), which pressurises or depressurises the spring chamber (18) by means of a two-edge control means via a pilot line (A), the inductive displacement sensor (14), pilot piston (12), proportional valve (6) and proportional magnet (4) together forming a closed control circuit.

2. Proportional flow-control valve according to claim 1, characterised in that the pilot piston (12) forms a stepped piston, its pressure actuation surface in the spring chamber (18) being larger than its opposite pressure actuation surface, comprising the pressure shoulder (30), in the pressure chamber.

## Revendications

1. Soupape d'étranglement proportionnel réglable comportant un corps en une ou plusieurs pièces, qui est pourvu d'une partie d'étranglement agencée comme une soupape à siège à deux voies, comportant un piston d'étranglement progressif (8), mobile axialement et actionné hydrauliquement, ainsi qu'une partie de commande, le piston d'étranglement progressif (8) comportant à sa première extrémité une surface d'application, qui forme avec un siège correspondant du corps une zone d'étranglement (10) de forme annulaire entre des premier et second raccords principaux du corps, et qui comporte à sa seconde extrémité opposée, dans une chambre de pression du corps, un épaulement de pression (22), cette chambre de pression étant reliée par un premier canal de liaison (26) prévu dans le piston d'étranglement progressif (8) avec le premier raccord principal et par un second canal de liaison (28) avec le second raccord principal, et le premier canal de liaison (28) comporte une ouverture, réglable par l'intermédiaire de la partie de commande, pour une régulation de la pression dans la chambre de pression et par conséquent du mouvement et de la position du piston d'étranglement progressif,
soupape caractérisée par
un piston de guidage différentiel (12), qui est guidé en alignement avec le premier canal de liaison (26) du piston d'étranglement progressif (8) et qui constitue avec une surface de siège formée sur le premier canal de liaison (26) dans la chambre de pression une commande à chants dans un mode de construction à sièges, ce piston de guidage différentiel (12) créant dans la chambre de pression un épaulement de pression (30) agissant dans la direction d'ouverture de la commande à chants (10),
un capteur inductif de distance (14) pour une détermination de position du piston de guidage (12),
un ressort de pression (16) situé dans une chambre (18) et sollicitant le piston de guidage (12) en direction de la position de fermeture de la commande à chants (10), le piston de guidage (12) créant dans cette chambre de ressort de pression une surface d'actionnement par pression agissant en direction de la position de fermeture de la commande à chants (10),
une soupape de manoeuvre proportionnelle (6) commandée par un électro-aimant proportionnel (4) et qui sollicite ou décharge en pression la chambre à ressort (18) par une commande à deux chants et par l'intermédiaire d'un conduit pilote (A), le capteur de distance (14), le piston de guidage (12), la soupape proportionnelle (6) et l'électro-aimant proportionnel (4) formant ensemble un circuit de régulation fermé.

2. Soupape proportionnelle d'étranglement selon la revendication 1, caractérisée en ce que le piston de guidage (12) ferme un piston étagé, sa surface d'actionnement par pression dans la chambre de ressort (18) étant plus grande que sa surface opposée d'actionnement par pression située dans la chambre de pression et comportant l'épaulement de pression (30).
